# EUROPÄISCHE PATENTSCHRIFT

(11) **EP 2 020 420 B1**
(45) Veröffentlichungstag und Bekanntmachung des Hinweises auf die Patenterteilung: **10.10.2012**
(21) Anmeldenummer: 08013514.8
(22) Anmeldetag: 26.07.2008
(51) Int. Cl.: C08F 110/06, C08F 4/6592

(54) **Hochkristalline Polypropylenwachse**
High crystalline polypropylene waxes
Résine de polypropylène hautement cristalline

(30) Priorität: 03.08.2007 DE 102007036792
(43) Veröffentlichungstag der Anmeldung: 04.02.2009
(73) Patentinhaber: Clariant Finance (BVI) Limited, Road Town, Tortola (VG)
(72) Erfinder: Herrmann, Hans-Friedrich, Dr., 64521 Gross-Gerau (DE); Mehltretter, Gerhard, Dr., 65197 Wiesbaden (DE); Rausch, Hans, Di., 65760 Eschborn (DE); Hohner, Gerd, Dr., 86368 Gersthofen (DE)
(74) Vertreter: Jacobi, Carola

(56) Entgegenhaltungen:
- EP-A- 0 321 852
- EP-A- 0 890 584
- DE-A1- 4 030 399
- DE-A1- 19 648 895

## Beschreibung

Die vorliegende Erfindung betrifft Polypropylenwachse mit hohem Schmelzpunkt und hoher Kristallinität sowie die Verwendung solcher Wachse.

Unter Polypropylenwachsen werden hier in Abgrenzung zu kunststoffartigem Polypropylen Materialien mit niedrigen mittleren Polymerisationsgraden oder Kettenlängen verstanden. Diese bedingen wiederum niedrigere Schmelzviskositäten, die im Fall der Wachse, gemessen bei 170 °C, typischerweise im Bereich von etwa 20 bis 30.000 mPa·s, im Fall der Polypropylenkunststoffe in der Regel oberhalb 100.000 mPa·s liegen. Die physikalischen Eigenschaften von Polypropylenwachsen (PP-Wachse) unterscheiden sich deutlich von denen der Polypropylen-Kunststoffe. Entsprechend unterschiedlich sind auch die Anwendungsgebiete.

Polypropylenwachse werden industriell in vielfältiger Weise eingesetzt, z. B. als Dispergiermittel für Pigmente zur Einfärbung von thermoplastischen Kunststoffen, als Hilfsmittel bei der Kunststoffverarbeitung, als Mattierungs- und Scheuerschutzadditiv in Druckfarben und Lacken, als Bestandteil von Fototoner-Zusammensetzungen und in Formulierungen für Heißschmelzmassen. Für etliche dieser Anwendungen werden hohe Kristallinitätsgrade und hohe Schmelzpunkte gefordert. Beispielsweise kann durch Einsatz von PP-Wachsen mit hohem Schmelzpunkt in Heißschmelzmassen deren Wärmestandfestigkeit erhöht werden. Als Mattierungs- und Scheuerschutzmittel in Druckfarben und Lacken werden die Wachse in gemahlener, häufig auch mikronisierter Form verwendet. Hier sind hohe Kristallinitätsgrade von Vorteil, da diese mit hohen Produkthärten verbunden sind, was den Mahlprozess erleichtert bzw. die gewünschte niedrige Partikelgröße oft überhaupt erst ermöglicht. Hohe Härten bewirken darüber hinaus eine verbesserte Scheuerschutzwirkung. Als Maß für den Kristallinitätsgrad kann die über die DSC-Methode (Differential Scanning Calorimetry) gemessene Schmelzwärme oder der mittels Infrarot-Spektroskopie ermittelbare lsotaktizitätsgrad herangezogen werden.

Die Herstellung von Polypropylenwachsen kann u. a. nach prinzipiell ähnlichen Verfahren wie die von hochmolekularen Polypropylenkunststoffen, nämlich durch direkte Polymerisation von Propylen, gegebenenfalls unter Zusatz von anderen Olefinen als Comonomeren, unter Verwendung entsprechender Katalysatoren erfolgen. Allerdings sind dabei die Polymerisationsbedingungen und damit die Ansprüche an Katalysatoren und Verfahren naturgemäß jeweils deutlich andere, da der angestrebte Polymerisationsgrad jeweils unterschiedlich ist. Als Katalysatoren kommen z. B. solche des Ziegler-Natta- oder neuerdings auch des Metallocentyps in Frage.

Beispielsweise wird in der DE 3 148 229 die Herstellung von PP-Wachsen mit Hilfe von modifizierten Ziegler-Natta-Katalysatoren beschrieben. Es werden zwar Tropfpunkte bis maximal 158-160 °C angegeben, jedoch liegen die Schmelzwärmen nicht über 63 J/g. Die maximal erreichte Katalysatorausbeute ist 429 g Wachs/mmol Titan, d. h., die Menge an einzusetzendem Katalysator ist vergleichsweise hoch, was eine aufwendige Zersetzung und Abtrennung des Katalysators erforderlich macht.

In EP 321852 wird die Herstellung von Poly-alpha-Olefinwachsen mit Metallocenkatalysatoren beschrieben. Beansprucht werden Wachse mit Tropfpunkten zwischen 120 und 160 °C, die in den Ausführungsbeispielen offenbarten Wachse weisen Tropfpunkte zwischen 139 und 144 °C auf.

EP 890584 beschreibt mit Hilfe von Metallocenkatalysatoren hergestellte Polypropylenwachse mit Isotaktizitätsgraden von über 70 % und Schmelzwärmen von mehr als 80 J/g. Die nach der DSC-Methode bestimmten Schmelzpunkte liegen entsprechend den in den Ausführungsbeispielen gemachten Angaben zwischen 122 und 155 °C. Tropf- oder Erweichungspunkte sind nicht angegeben.

In WO 2006/053757 wird ein Verfahren zur Herstellung von u. a. Polypropylen mit einer Molmasse Mw zwischen 500 und 50.000 g/mol mit Hilfe spezieller Metallocenkatalysatoren beschrieben. Die in den Ausführungsbeispielen genannten Polypropylene weisen mittlere Molmassen Mw zwischen 51.000 und 496.000 g/mol sowie Schmelzpunkte zwischen 151 und 153 °C auf.

Es sind bisher keine durch direkte Polymerisation gewonnenen PP-Wachse mit Tropf- oder Erweichungspunkten oberhalb 160 °C und DSC-Schmelzpunkten oberhalb 155 °C bekannt.

Weiterhin ist z. B. aus US 2,835,659 bekannt, dass Polypropylenwachse durch thermischen Abbau von Polypropylenkunststoff bei Temperaturen oberhalb 300 °C zugänglich sind. Bei Einsatz entsprechender Rohstoffe können hochkristalline Wachse mit hohem Schmelzpunkt erhalten werden, doch weisen diese aufgrund der für den Abbauprozess erforderlichen hohen Temperaturen und langen Verweilzeiten thermische und oxidative Schädigungen auf, die sich etwa in unerwünschten Gelbverfärbungen und nachteiligen Geruchseigenschaften äußern. Die abgebauten Kettenmoleküle enthalten aufgrund des Reaktionsmechanismus zu ca. 50 % olefinische Doppelbindungen, die aufgrund ihrer Reaktivität die chemische und thermische Stabilität der Wachse beeinträchtigen.

Es bestand daher die Aufgabe, Polypropylenwachse mit gleichzeitig hohem Tropf- oder Erweichungspunkt, hoher Kristallinität, hoher Härte, geringem Gehalt an olefinischen Doppelbindungen, heller Farbe und guter Thermostabilität zur Verfügung zu stellen.

Überraschenderweise wurde nun gefunden, dass hochschmelzende, hochkristalline und gleichzeitig thermostabile PP-Wachse in hohen Katalysatorausbeuten durch direkte Polymerisation von Propylen, insbesondere bei Verwendung von Metallocenkatalysatoren zugänglich sind.

Die Erfindung betrifft ein Verfahren zum Herstellen von Polypropylenwachs, nach Patentanspruch 1

Bevorzugt werden Polypropylenwachse hergestellt mit Tropf- bzw. Erweichungspunkten größer als 162 °C. Die DSC-Schmelzpunkte sind bevorzugt größer 158 °C. Bevorzugte Schmelzwärmen sind solche oberhalb 100 J/g. Die Polypropylenwachse weisen eines Gehalt an ungesättigten Kettenenden kleiner als 5 %, und eineMolmassenverteilung Mw/Mn zwischen 1,8 und 2,5 auf.

Für die Herstellung der erfindungsgemäß verwendeten Polyolefinwachse werden Metallocenverbindungen eingesetzt.

Erfindungsgemäß werden folgende Metallocene eingesetzt: Dimethylsilandiylbis(2-Methyl-4-phenyl-indenyl)zirkoniumdichlorid Ethandiylbis(2-Methyl-4-phenyl-indenyl)zirkoniumdichlorid Dimethylsilandiylbis-(2-Methyl-4-naphthyl-indenyl)zirkoniumdichlorid Dimethylsilandiylbis-6-[2,5-dimethyl-3-(2'-methly-phenyl)cyclopentadienyl-[1,2-b]-thiophene]zirkoniumdichlorid sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²⁰ₓNH₄₋ₓBR²¹₄, R²⁰ₓPH₄₋ₓBR²¹₄, R²⁰₃CBR²¹₄ oder BR²¹₃. In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bistrifluormethylphenyl, Mesityl, Xylyl oder Tolyl.

Zusätzlich ist häufig eine dritte Komponente erforderlich, um einen Schutz vor polaren Katalysator-Giften aufrecht zu erhalten. Hierzu sind aluminiumorganische Verbindung wie z. B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Der Katalysator kann als Lösung, Suspension oder in geträgerter Form trocken dosiert werden. Als Lösungs- bzw. Suspendiermittel sind für Katalysator oder Cokatalysator sind allgemein Kohlenwasserstoffe wie Hexan, Cyclohexan, Heptan, Octan, technische Dieselöle, Toluol, Xylol geeignet.

Die Polymerisation kann in Lösung, Suspension oder in der Gasphase bei Temperaturen zwischen 40 und 140 °C, bei einem Olefin-Partialdruck zwischen 1 und 50 bar, bei einem Wasserstoff-Partialdruck zwischen 0 und 10 bar, unter Zugabe von (bezogen auf Aluminium) von 0,01 bis 10 mmol Cokatalysator/Liter Suspensions- oder Lösungsmittel und einem Katalysator/Cokatalysator-Verhältnis von 1:1 bis 1:1.000 durchgeführt werden. Die Polymerisation kann zur Inertisierung unter Zusatz einer weiteren aluminiumorganischen Verbindung wie z. B. Trimethylaluminium, Triethylaluminium, Triisobutylaluminium oder Isoprenylaluminium in einer Konzentration von 1 bis 0,001 mmol Aluminium/l Reaktorvolumen durchgeführt werden.

Es kann diskontinuierlich oder kontinuierlich sowie ein- oder mehrstufig polymerisiert werden.

Die Molmasse und damit die Schmelzviskosität der erfindungsgemäßen Wachse kann wie bekannt mit Wasserstoff und/oder auch über die Polymerisationstemperatur geregelt werden. Erhöhte Wasserstoffkonzentrationen oder erhöhte Polymerisationstemperaturen führen in der Regel zu niedrigeren Molmassen.

Die erfindungsgemäßen Wachse können durch Einführung polarer, beispielsweise sauerstoffhaltiger Funktionen chemisch modifiziert werden. Die Modifizierung erfolgt in bekannter Weise z. B. durch radikalische Pfropfreaktion mit polaren Monomeren, beispielsweise α,β-ungesättigten Carbonsäuren oder deren Derivaten wie Acrylsäure, Maleinsäure oder Maleinsäureanhydrid oder ungesättigten Organosilanverbindungen wie Alkoxyvinylsilanen. Verfahren zur Pfropfung von Polypropylenwachsen sind beispielsweise in EP 0 941 257 oder EP 1 508 579 beschrieben.

Die erfindungsgemäßen Wachse können, gegebenenfalls nach polarer Modifizierung, z. B. als Dispergiermittel für Pigmente zur Einfärbung von thermoplastischen Kunststoffen, als Gleit- oder Trennmittel bei der Kunststoffverarbeitung, als Mattierungs- und Scheuerschutzadditiv in Druckfarben und Lacken und als Bestandteil von Fototoner-Zusammensetzungen eingesetzt werden, weiterhin, bevorzugt in polar modifizierter Form, auch für die Herstellung stabiler wässriger Dispersionen. In besonderer Weise sind die polar modifizierten erfindungsgemäßen Wachse für den Einsatz als Haft- und Verträglichkeitsvermittler in Blends oder Compounds von thermoplastischen Kunststoffen, beispielsweise Polyolefinen wie Polypropylen, mit anorganischen oder organischen Füllstoffen oder verstärkenden Materialien wie Glasfasern, Calciumcarbonat, Aluminiumsilikaten, Sicliciumdioxid, Magnesiumsilikaten (Talcum), Bariumsulfat, Aluminium-Kalium-Natrium-Silikaten, Metallen oder Metalloxiden wie Aluminium oder Aluiniumoxiden bzw. -hydroxiden, Rußen, Graphit, Holz- und Korkmehl sowie Naturfasern wie Flachs oder Hanf geeignet.

Unter anderem wegen ihrer hohen Schmelzpunkte eignen sich die erfindungsgemäßen Wachse insbesondere als Rezepturbestandteile für Heißschmelzmassen mit dem Vorteil hoher Wärmestandfestigkeiten, beispielsweise für die Verwendung als hot melt-Klebstoff oder für Straßenmarkierungen.

Die Wachse können durch Versprühung oder Vermahlung zu Pulvern verarbeitet und auch in dieser Form eingesetzt werden, wenn dies anwendungstechnisch erforderlich oder vorteilhaft ist. Sie sind aufgrund ihrer hohen Härte und Sprödigkeit in besonderer Weise für die Vermahlung beispielsweise auf Strahl- oder mechanischen Mühlen geeignet. Die Feinheitsgrade können in weiten Bereichen eingestellt werden können; es sind d50-Werten bis < 8 µm zugänglich. Die Wachse können sowohl in reiner Form als auch in Mischung mit Wachsen anderer Art wie Amidwachsen, unpolaren oder polaren Polyolefinwachsen auf Nicht-Metallocenbasis, Montan- oder Carnaubawachsen, Paraffinen wie Fischer-Tropsch-Paraffinen oder weiteren Komponenten wie PTFE (Polytetrafluorethylen) zerkleinert und angewendet werden.

### Beispiele:

Die Schmelzviskositäten wurden nach DIN 53019 mit einem Rotationsviskosimeter, die Tropfpunkte nach DIN 51801/2, die Erweichungspunkte Ring/Kugel nach DIN EN 1427 bestimmt. DSC-Schmelzpunkte und Schmelzwärmen wurden mit gemäß DIN 51700 bestimmt. Ausgewertet wurde jeweils die zweite Aufheizkurve, die Heiz- und Kühlrate betrug jeweils 10 °C/min.

Die Untersuchung der Kettenenden der Polymere erfolgte über 13C-NMR-Spektroskopie wie in Polymer, 1989, Vol. 30, S. 428 beschrieben. Sofern weniger als 10 % aller Endgruppen ungesättigt vorliegen, erscheint in den Beispielen die Angabe "gesättigt".

### Beispiel 1

Ein trockener 120 L-Kessel wurde mit Stickstoff gespült, 2,4 bar Wasserstoff aufgedrückt, mit 40 L Propylen befüllt und auf eine Temperatur von 70 °C gebracht. Parallel dazu wurden 10 mg rac-Dimethylsilandiylbis(2-methyl-4-phenylindenyl)zirkoniumdichlorid in 30 ml toluolischer Methylaluminoxanlösung (5 Gew.-% Al) gelöst und durch 15-minütiges Stehenlassen voraktiviert. Die Katalysatorlösung wurde mit 170 ml Toluol verdünnt und dann innerhalb von 30 Minuten in den Kessel gegeben. Nach beendeter Zugabe wurde 30 Minuten lang weiter gerührt. Während der gesamten Reaktionsdauer wurde die Temperatur durch Kühlung bei 70 °C gehalten. Der Druck wurde durch Nachdosieren von Propylen konstant gehalten, die Wasserstoffkonzentration wurde durch Nachfahren von Wasserstoff ebenfalls konstant gehalten. Nach Ablauf der Nachrührzeit wurde durch Zugabe von Kohlendioxid die Reaktion gestoppt.

Es wurden 9,3 kg Polypropylenwachs erhalten, entsprechend einer Katalysatoraktivität von 590 kg PP-Wachs / mmol Zirkonium / Stunde.

| | |
|---|---|
| Tropfpunkt/Erweichungspunkt (Ring/Kugel): | 162 °C |
| Schmelzpunkt (DSC) | 158 °C |
| Schmelzwärme (DSC) ΔH | 125 J/g |
| Schmelzviskosität (170 °C) 543 | 9.560 mPas. |
| Keine ungesättigten Kettenenden. | |

### Beispiel 2

Es wurde wie in Beispiel 1 verfahren, jedoch wurden nur 1,0 bar Wasserstoff aufgedrückt.

Es wurden 2,1 kg Polypropylenwachs erhalten, entsprechend einer Katalysatoraktivität von 130 kg PP-Wachs / mmol Zirkonium / Stunde.

| | |
|---|---|
| Tropfpunkt/Erweichungspunkt (Ring/Kugel): | 167 °C |
| Schmelzpunkt (DSC) | 158 °C |
| Schmelzwärme (DSC) ΔH | 127 J/g |
| Schmelzviskosität (170 °C) | 9.560 mPas. |
| Keine ungesättigten Kettenenden. | |

### Beispiel 3

Es wurde wie in Beispiel 1 verfahren, jedoch wurde der Kessel nach dem Aufdrücken von 0,2 bar Wasserstoff mit 40 L Exxsol und 27 L Propylen gefüllt und die Polymerisation bei einer Temperatur von 105 °C durchgeführt.

Es wurden 4,3 kg Polypropylenwachs erhalten, entsprechend einer Katalysatoraktivität von 270 kg PP-Wachs / mmol Zirkonium / Stunde.

| | |
|---|---|
| Tropfpunkt/Erweichungspunkt (Ring/Kugel): | 163 °C |
| Schmelzpunkt (DSC) | 160 °C |
| Schmelzwärme (DSC) ΔH | 101 J/g |
| Schmelzviskosität (170 °C) | 8.300 mPas. |
| Keine ungesättigten Kettenenden. | |

### Beispiel 4

Es wurde wie in Beispiel 1 verfahren, jedoch wurde rac-Ethandiylbis(2-methyl-4-phenyl-indenyl)zirkoniumdichlorid als Katalysator verwendet

Es wurden 6,0 kg Polypropylenwachs erhalten, entsprechend einer Katalysatoraktivität von 354 kg PP-Wachs / mmol Zirkonium / Stunde.

| | |
|---|---|
| Tropfpunkt/Erweichungspunkt (Ring/Kugel) | 161 °C |
| Schmelzpunkt (DSC) | 158 °C |
| Schmelzwärme (DSC) ΔH | 121 J/g |
| Schmelzviskosität (170 °C) | 189 mPas. |
| Keine ungesättigten Kettenenden. | |

### Beispiel 5

Es wurde wie in Beispiel 4 verfahren, jedoch wurden nur 0,5 bar Wasserstoff aufgedrückt.

Es wurden 5,2 kg Polypropylenwachs erhalten, entsprechend einer Katalysatoraktivität von 311 kg PP-Wachs / mmol Zirkonium / Stunde.

| | |
|---|---|
| Tropfpunkt/Erweichungspunkt (Ring/Kugel) | 162 °C |
| Schmelzpunkt (DSC) | 158 °C |
| Schmelzwärme (DSC) ΔH | 98 J/g |
| Schmelzviskosität (170 °C) | 5.530 mPas. |
| Keine ungesättigten Kettenenden. | |

### Beispiel 6

Es wurde wie in Beispiel 3 verfahren, jedoch wurde rac-Dimethylsilandiylbis-6-[2,5-dimethyl-3-(2'-methyl-phenyl)cyclopentadienyl-[1,2-b]-thiophene] zirkoniumdichlorid als Katalysator verwendet und 0,4 bar Wasserstoff aufgedrückt.
Es wurden 3,9 kg Polypropylenwachs erhalten, entsprechend einer Katalysatoraktivität von 379 kg PP-Wachs / mmol Zirkonium / Stunde.

| | |
|---|---|
| Erweichungspunkt (Ring/Kugel): | 165 °C |
| Schmelzpunkt (DSC) | 161 °C |
| Schmelzwärme (DSC) ΔH | 103 J/g |
| Schmelzviskosität (170 °C): | 2.440 mPas. |
| Keine ungesättigten Kettenenden. | |

### Beispiel 7

Es wurde wie in Beispiel 1 verfahren, jedoch wurde rac- Dimethylsilandiylbis-(2-Methyl-4-indenyl-indenyl)zirkoniumdichlorid als Katalysator verwendet.

Es wurden 8,3 kg Polypropylenwachs erhalten, entsprechend einer Katalysatoraktivität von 560 kg PP-Wachs / mmol Zirkonium / Stunde.

| | |
|---|---|
| Tropfpunkt/Erweichungspunkt (Ring/Kugel): | 163 °C |
| Schmelzpunkt (DSC) | 159 °C |
| Schmelzwärme (DSC) ΔH | 109 J/g |
| Schmelzviskosität (170 °C) | 750 mPas. |
| Keine ungesättigten Kettenenden. | |

### Beispiel 8, Vergleichsbeispiel 1 (Mikronisierung):

Das Wachs aus Beispiel 1 wurde auf einer Fließbettgegenstrahlmühle AFG 100, Fa. Hosokawa Alpine gemahlen. Als nicht erfindungsgemäßer Vergleich wurde unter analogen Bedingungen ein durch thermischen Abbau hergestelltes Polypropylenwachs vom Typ L-C^{®} 502N der Fa. Lion Chemical Co., Ltd. mit einem Erweichungspunkt von 151 °C und einer Schmelzviskosität von 210 mPa·s/170 °C gemahlen. Die Ergebnisse sind in Tab. 1 gegenübergestellt. Sie zeigen, dass mit dem Wachs aus Beispiel 1 ein Micronisat mit vergleichbar feiner Partikelgröße d50, aber deutlich höherer Durchsatzmenge erhalten werden konnte.

| | Mahldruck bar | Sichterdrehzahl Upm | Durchsatz g/h | d50-Wert*) µm |
|---|---|---|---|---|
| Beispiel 8 | 6,5 | 10.500 | 950 | 7,8 |
| Vergleichsbeispiel 1 | 7,0 | 11.000 | 390 | 7,7 |

| | | | | |
|---|---|---|---|---|
| *) gemessen nach der Laserbeugungsmethode mit einem Gerät der Fa. Malvern. | | | | |

### Beispiel 9 und Vergleichsbeispiel 2 (Verwendung in einer Druckfarbenrezeptur):

Die mikronisierten Wachse aus Beispiel 8 und Vergleichsbeispiel 1 wurden in einer Einsatzmenge von 1,5 Gew.-% unter intensivem Rühren mit einem Dissolver in eine Offsetfarbe (Novaboard cyan 4 C 86, K+E Druckfarben) eingearbeitet. Man fertigte einen Probedruck (Prüfbau-Mehrzweck-Probedruckmaschine System Dr. Dürner) auf Papier des Typs Phoenomatt 115 g/m² (Scheufelen GmbH+Co KG) an und untersuchte das Scheuerverhalten auf einem Scheuerprüf-Gerät (Scheuerprüfer Prüfbau Quartant) bei einer Scheuerbelastung von 48 g/cm² und einer Scheuergeschwindigkeit von 15 cm/sec. Beurteilt wurde die Intensität der auf das Prüfblatt übertragenen Farbe (Farbdifferenz nach DIN 6174, Messung mit Hunterlab D 25-2, Hunter). Die in nachfolgender Tabelle dargestellten Resultate zeigen, dass das erfindungsgemäße Wachs bezüglich Farbdifferenz und damit Abriebfestigkeit dem Vergleich überlegen ist.

| | Farbdifferenz | |
|---|---|---|
| | 100 Hub | 200 Hub |
| Vergleich ohne Wachs | 14,4 | 15,9 |
| Beispiel 9 | 1,5 | 1,8 |
| Vergleichsbeispiel 2 | 2,5 | 3,1 |

### Beispiel 10, Vergleichsbeispiel 3 (Verwendung zur Pigmentdispergierung)

Zur Herstellung eines Pigment-Masterbatches wurde eine Mischung aus 30 Gew.-% des in Beispiel 4 beschriebenen Wachses, 40 Gew.-% des Pigments C.I. Pigment Blue 15:1 (C.I. Nr. 74160 Heucoblau^{®} 515303) und 30 Gew.-% Polypropylen des Typs PP HG 235 J (Borealis) in einem Henschel-Mischer FM 10 während 5 min mit 1.000 Upm Rührgeschwindigkeit bei Raumtemperatur vermischt. Anschließend wurde die Mischung in einem gleichlaufenden Doppelschneckenextruder zum Masterbatch verarbeitet.

Zur Beurteilung der Dispergierqualität wurde der Druckfilterwert nach der Norm DIN EN 13009-5 gemessen. Dieser Wert ist umso niedriger, je besser die Verteilung des Pigments in der Polyolefinmatrix ist. Im vorliegenden Fall ergab sich ein Messwert von 12,8 bar/g.

Als Vergleich diente die durch thermischen Abbau hergestellte Polypropylenwachstype L-C^{®} 502N der Fa. Lion Chemical Co., Ltd. mit einem Erweichungspunkt von 151 °C und einer Schmelzviskosität von 210 mPa·s/170 °C, die entsprechend Beispiel 9 anstelle des erfindungsgemäßen Polypropylenwachses aus Beispiel 4 eingesetzt wurde. Der gemessene Druckfilterwert betrug 17,9 bar/g.

### Beispiel 11, Vergleichsbeispiel 3 (Verwendung in Heißschmelzklebemassen)

Es wurden Schmelzklebemassen entsprechend nachfolgender Tabelle hergestellt. Die Komponenten wurden gemeinsam aufgeschmolzen und durch Rühren bei 180 °C gemischt. Zur Prüfung der Kohäsion wurden aus den Mischungen gemäß DIN 53455 Formkörper vergossen und deren mechanischen Stabilität im Zugversuch geprüft. Als Vergleich wurde die durch Ziegler-Natta-Polymerisation hergestellte Polypropylenwachstype Licowax^{®} PP 220 der Fa. Clariant Corporation mit einer Schmelzviskosität von 800 mPa.s/170 °C, einem DSC-Schmelzpunkt von 154 °C und einer Schmelzwärme von 72 J/g eingesetzt. Licocene PP 1602 TP ist der Handelsname für ein niedrigkristallines Metallocen-Propylenpolymer der Fa. Clariant Corporation mit einem Erweichungspunkt Ring/Kugel von ca. 90 °C, Regalite^{®} 1140 der Handelsname für ein Kohlenwasserstoffharz der Fa. Eastman Chem. Co.

Die Gegenüberstellung zeigt, dass die Mischung mit Wachs nach Beispiel 11 bei gleichzeitig verbesserter Kohäsion einen höheren Erweichungspunkt und damit eine höhere Wärmestandfestigkeit aufweist als die Vergleichsmischung mit einem nicht erfindungsgemäßen Polypropylenwachs.

| | Beispiel 11 | Vergleichsbeispiel 3 | |
|---|---|---|---|
| Licocene^{®} PP 1602 TP | 70 | 70 | Gew.-Tle. |
| Wachs aus Beispiel 7 | 5 | | Gew.-Tle. |
| Licowax^{®} PP 220 | | 5 | Gew.-Tle. |
| Regalite^{®} 1140 | 25 | 25 | Gew.-Tle. |
| Erweichungspunkt | 160 | 153 | °C |
| Kohäsion | 5,5 | 3,0 | N/mm² |

## Patentansprüche

1. Verfahren zum Herstellen von Polypropylenwachs durch direkte Polymerisation von Propylen bei Temperaturen im Bereich von 40 bis 140 °C, unter einem Olefin-Partialdruck im Bereich von 1 bis 50 bar und mit Hilfe von Metallocenkatalysatoren ausgewählt aus der Gruppe bestehend aus:
Dimethylsilandiylbis-(2-Methyl-4-phenyl-indenyl)zirkoniumdichlorid, Ethandiylbis-(2-Methyl-4-phenyl-indenyl)zirkoniumdichlorid, Dimethylsilandiylbis-(2-Methyl-4-naphthyl-indenyl)zirkoniumdichlorid, Dimethylsilandiylbis-6-[2,5-dimethyl-3-(2'-methly-phenyl)cyclopentadienyl-[1,2-b]-thiophene]zirkoniumdichlorid und deren Alkyl- oder Aryl-Derivate und in Gegenwart eines Cokatalysators,
**dadurch gekennzeichnet, dass** das hergestellte Polypropylenwachs
a) einen Tropf- bzw. Erweichungspunkt Ring/Kugel nach DIN EN 1427 von größer als 160 °C,
b) eine Schmelzwärme nach DIN 51700 von größer als 90 J/g,
c) einen DSC-Schmelzpunkt nach DIN 51700 von > 157 °C und
d) eine Viskosität, gemessen nach DIN 53019 in der Schmelze bei 170 °C, zwischen 50 und 20.000 mPa·s besitzt,
dass das hergestellte Polypropylenwachs eine Molmassenverteilung M_{w}/Mₙ im Bereich von 1,8 bis 2,5 besitzt und
dass der Gehalt des hergestellten Polypropylenwachses an ungesättigten Kettenenden kleiner 5 % ist.

2. Verfahren nach Anspruch 1, **dadurch gekennzeichnet, dass** als Cokatalysator aluminiumorganische Verbindungen, insbesondere Alumoxane oder aluminiumfreie Systeme aus der Gruppe:
R²⁰ₓNH₄₋ₓBR²¹₄, R²⁰ₓPH₄₋ₓBR²¹₄, R²⁰₃CBR²¹₄ oder BR²¹₃
eingesetzt werden, wobei x eine Zahl von 1 bis 4 ist, die Reste R²⁰ gleich oder verschieden sind und C₁-C₁₀-Alkyl oder C₆-C₁₈-Aryl bedeuten oder zwei Reste R²⁰ zusammen mit dem sie verbindenden Atom einen Ring bilden, und die Reste R²¹ gleich oder verschieden sind und für einen gegebenenfalls substituierten C₆-C₁₈-Arylrest stehen.

3. Verfahren nach Anspruch 1 oder 2, **dadurch gekennzeichnet, dass** dem Reaktionsgemisch zusätzlich aluminiumorganische Verbindungen oder Mischungen derselben zugegeben werden.

4. Verfahren nach mindestens einem der vorhergehenden Ansprüche 1 bis 3, **dadurch gekennzeichnet, dass** der Katalysator und der Cokatalysator in Lösung oder suspendiert dem Reaktionsgemisch zugegeben werden.

5. Verwendung von Polypropylenwachsen hergestellt nach einem Verfahren nach mindestens einem der Ansprüche 1 bis 4 als Dispergiermittel für Pigmente.

6. Verwendung von Polypropylenwachsen hergestellt nach einem Verfahren nach mindestens einem der Ansprüche 1 bis 4 in Fototonern.

7. Verwendung von Polypropylenwachsen hergestellt nach einem Verfahren nach mindestens einem der Ansprüche 1 bis 4 als Gleit- oder Trennmittel für die Kunststoffverarbeitung.

8. Verwendung von Polypropylenwachsen hergestellt nach einem Verfahren nach mindestens einem der Ansprüche 1 bis 4 zur Herstellung wässriger Dispersionen.

9. Verwendung von Polypropylenwachsen hergestellt nach einem Verfahren nach mindestens einem der Ansprüche 1 bis 4 als Rezepturkomponente in Heißschmelzmassen.

## Claims

1. A process for preparing polypropylene wax by direct polymerization of propylene at temperatures in the range from 40 to 140°C under an olefin partial pressure in the range from 1 to 50 bar and with the aid of metallocene catalysts selected from the group consisting of:
dimethylsilanediylbis(2-methyl-4-phenylindenyl)zirconium dichloride, ethanediylbis(2-methyl-4-phenylindenyl)zirconium dichloride, dimethylsilanediylbis(2-methyl-4-naphthylindenyl)zirconium dichloride, dimethylsilanediylbis-6-[2,5-dimethyl-3-(2'-methylphenyl)cyclopentadienyl[1,2-b]-thiophene]zirconium dichloride and the alkyl or aryl derivatives thereof and in the presence of a cocatalyst,
wherein the polypropylene wax prepared has
a) a dropping or softening point determined by the ring/ball method in accordance with DIN EN 1427 of greater than 160°C,
b) a heat of fusion in accordance with DIN 51700 of greater than 90 J/g,
c) a DSC melting point in accordance with DIN 51700 of > 157°C and
d) a viscosity measured in accordance with DIN 53019 in the melt at 170°C of from 50 to 20 000 mPa·s,
the polypropylene wax prepared has a molar mass distribution M_{w}/Mₙ in the range from 1.8 to 2.5 and
the content of unsaturated chain ends in the polypropylene wax prepared is less than 5%.

2. The process as claimed in claim 1, wherein organoaluminum compounds, in particular aluminoxanes or aluminum-free systems selected from the group consisting of:
R²⁰ₓNH₄₋ₓBR²¹₄, R²⁰ₓPH₄₋ₓBR²¹₄, R²⁰₃CBR²¹₄ or BR²¹₃
where x is from 1 to 4, the radicals R²⁰ are identical or different and are each C₁-C₁₀-alkyl or C₆-C₁₈-aryl or two radicals R²⁰ together with the atom connecting them form a ring and the radicals R²¹ are identical or different and are each a substituted or unsubstituted C₆-C₁₈-aryl radical, are used as cocatalyst.

3. The process as claimed in claim 1 or 2, wherein organoaluminum compounds or mixtures thereof are additionally added to the reaction mixture.

4. The process as claimed in at least one of the preceding claims 1 to 3, wherein the catalyst and the cocatalyst are added in solution or in suspension to the reaction mixture.

5. The use of polypropylene waxes prepared by a process as claimed in at least one of claims 1 to 4 as dispersants for pigments.

6. The use of polypropylene waxes prepared by a process as claimed in at least one of claims 1 to 4 in photo toners.

7. The use of polypropylene waxes prepared by a process as claimed in at least one of claims 1 to 4 as lubricants or mold release agents for plastics processing.

8. The use of polypropylene waxes prepared by a process as claimed in at least one of claims 1 to 4 for producing aqueous dispersions.

9. The use of polypropylene waxes prepared by a process as claimed in at least one of claims 1 to 4 as formulation component in hot melt compositions.

## Revendications

1. Procédé pour la préparation de cire de polypropylène par polymérisation directe de propylène à des températures dans la plage de 40 à 140°C, sous une pression partielle d'oléfine dans la plage de 1 à 50 bars et à l'aide de catalyseurs métallocène choisis dans le groupe constitué par : le dichlorure de diméthylsilanediylbis-(2-méthyl-4-phényl-indényl)-zirconium, le dichlorure d'éthanediylbis-(2-méthyl-4-phényl-indényl)zirconium, le dichlorure de diméthylsilanediylbis-(2-méthyl-4-naphtyl-indényl)-zirconium, le dichlorure de diméthylsilanediylbis-6-(2,5-diméthyl-3-(2'-méthyl-phényl)cyclopentadiényl-[1,2-b]-thiophène]zirconium et leurs dérivés alkyle ou aryle et en présence d'un co-catalyseur,
**caractérisé en ce que** la cire de polypropylène produite présente
a) un point de goutte ou de ramollissement bille/anneau selon DIN EN 1427 supérieur à 160°C,
b) une chaleur de fusion selon DIN 51700 de plus de 90 J/g,
c) un point de fusion DSC selon DIN 51700 de > 157°C et
d) une viscosité, mesurée selon DIN 53019 dans la masse fondue, à 170°C, comprise entre 50 et 20 000 mPa.s,
**en ce que** la cire de polypropylène produite présente une distribution de masse moléculaire M_{w}/Mₙ dans la plage de 1,8 à 2,5 et
**en ce que** la teneur en extrémités de chaîne insaturées de la cire de polypropylène produite est inférieure à 5 %.

2. Procédé selon la revendication 1, **caractérisé en ce qu'**on utilise comme co-catalyseur des composés organo-aluminiques, en particulier des aluminoxanes ou des systèmes exempts d'aluminium choisis dans le groupe :
R²⁰ₓNH₄₋ₓBR²¹₄, R²⁰ₓPH₄₋ₓBR²¹₄, R²⁰₃CBR²¹₄ ou BR²¹₃
x étant un nombre valant de 1 à 4, les radicaux R²⁰ étant identiques ou différents et représentant des groupes alkyle en C₁-C₁₀ ou aryle en C₆-C₁₈ ou deux radicaux R²⁰ formant conjointement avec l'atome qui les relie un cycle, et les radicaux R²¹ étant identiques ou différents et représentant un radical aryle en C₆-C₁₈ éventuellement substitué.

3. Procédé selon la revendication 1 ou 2, **caractérisé en ce qu'**en outre on ajoute au mélange réactionnel des composés organoaluminiques ou des mélanges de ceux-ci.

4. Procédé selon au moins l'une quelconque des revendications 1 à 3 précédentes, **caractérisé en ce qu'**on ajoute au mélange réactionnel le catalyseur et le co-catalyseur en solution ou en suspension.

5. Utilisation des cires de polypropylène préparées conformément à un procédé selon au moins l'une quelconque des revendications 1 à 4, en tant que dispersant pour pigments.

6. Utilisation des cires de polypropylène préparées conformément à un procédé selon au moins l'une quelconque des revendications 1 à 4, dans des toners électrophotographiques.

7. Utilisation des cires de polypropylène préparées conformément à un procédé selon au moins l'une quelconque des revendications 1 à 4, en tant que lubrifiant ou agent de démoulage pour la mise en oeuvre de matières plastiques.

8. Utilisation des cires de polypropylène préparées conformément à un procédé selon au moins l'une quelconque des revendications 1 à 4, pour la préparation de dispersions aqueuses.

9. Utilisation des cires de polypropylène préparées conformément à un procédé selon au moins l'une quelconque des revendications 1 à 4, en tant que composant de formulation dans des matières thermofusibles.
